# EUROPÄISCHE PATENTSCHRIFT

(11) **EP 3 406 551 B1**
(45) Veröffentlichungstag und Bekanntmachung des Hinweises auf die Patenterteilung: **28.04.2021**
(21) Anmeldenummer: 18172584.7
(22) Anmeldetag: 16.05.2018
(51) Int. Cl.: B25J 15/02

(54) **VERRIEGELUNG FÜR EINEN VLIESWICKLER**
LOCKING DEVICE FOR A NON-WOVEN WINDER
VERROUILLAGE POUR UN BOBINEUR DE NON-TISSÉ

(30) Priorität: 24.05.2017 DE 102017111428
(43) Veröffentlichungstag der Anmeldung: 28.11.2018
(73) Patentinhaber: Trützschler GmbH & Co. KG, 41199 Mönchengladbach (DE)
(72) Erfinder: Barlog, Krzysztof, 64347 Griesheim (DE); Hachmann, Andreas, 33758 Schloß Holte-Stukenbrock (DE)

(56) Entgegenhaltungen:
- EP-A1- 0 849 202
- WO-A1-98/47801
- US-A- 4 728 137
- US-A- 6 145 778
- US-A1- 2005 023 407

## Beschreibung

Die Erfindung betrifft eine Verriegelung für einen Vlieswickler zum sicheren Ergreifen einer Wickelwelle sowie einen damit ausgestatteten Vlieswickler.

Vlieswickler an sich sind bekannt. Sie dienen dazu, ein beispielsweise aus einer Karde herauskommendes Vlies auf eine Wickelwelle aufzuwickeln. Dazu werden leere Wickelwellen im automatischen Wechsel nacheinander bewickelt. Dies erfolgt, indem ankommendes Vliesmaterial um eine rotierende Kontaktwalze herumgeführt wird. Eine mit einer adhäsiv wirkenden Oberfläche versehene und in zur Kontaktwalze entgegengesetzter Richtung rotierende, leere Wickelwelle wird an die Kontaktwalze angelegt und übernimmt aufgrund der Adhäsionswirkung das Vlies von der Kontaktwalze. Leere Wickelwellen sind üblicherweise in einem Magazin des Vlieswicklers untergebracht. Um eine leere Wickelwelle zu bewickeln, wird diese aus dem Magazin in eine Warteposition überführt, in der die Wickelwelle angedreht, also in Rotation versetzt wird. Dabei ist die Wickelwelle beiderends mittels einer Art Zange verriegelt und wird vorzugsweise über eine Anwickelposition in die eigentliche Wickelposition befördert. Dort wird die Wickelwelle von einem Wickel- und Ausschubabschnitt übernommen, die Zangenverriegelung löst und wird in Richtung nächste, sich in Warteposition befindlicher, anderer Wickelwelle zurückbewegt, um nunmehr diese Wickelwelle aufzunehmen bzw. zu verriegeln. Während des Bewickelns wird die sich in Wickelposition befindliche Wickelwelle mittels des Wickel- und Ausschubabschnitts gegen die rotierende Kontaktwalze gedrückt und aufgrund der Reibung mit dieser mit dem sich auf der Kontaktwalze befindlichen Vlies bewickelt. Ist die Wickelwelle nahezu vollständig bewickelt, wird sie in eine Ausschubposition gebracht, und die nächste Wickelwelle wird verriegelt, angedreht und transportiert, wie vorstehend beschrieben.

Die EP 0 849 202 A1 offenbart ein Verfahren zum Aufwickeln einer Papier-oder Kartonbahn, wobei die Bahn auf eine Walze, insbesondere Tambour, aufgewickelt wird. Die Bahn wird über eine Tragtrommel geführt, und eine leere Walze, insbesondere Tambour, wird mit der Tragtrommel in Kontakt gebracht. Die Bewegung der leeren Walze während des Positionswechsels von einer Vorratsstellung zu einer Aufwickelstellung sowie das Festhalten der Achsen der leeren Walze erfolgen über Drehgelenke. Eine Vorrichtung zur Durchführung dieses Verfahrens ist dadurch gekennzeichnet, dass an einem Wipphebel ein Druckzylinder zum Schließen oder Öffnen einer Festhaltevorrichtung und ein weiterer Druckzylinder zur Gewichtskompensation und die Anpressung der leeren Walze an die Tragtrommel vorgesehen sind.

Zum Verriegeln der Wickelwelle mittels der Zange sind hinsichtlich der Rotationsachse der Wickelwelle zweiseitig wirkende Zangenvorrichtungen bekannt, die sehr aufwändig im Aufbau sind. Zudem müssen deren Verriegelungselemente von zwei Seiten der Wickelwelle an diese herangeführt werden, was den Bewegungsweg der Verriegelung und deren insbesondere antriebstechnisch Integration in den Vlieswickler verkompliziert. Abgesehen davon kann es bei Verlust der Energie bei einem eine Zange betätigenden Antriebselement dazu kommen, dass sich die Wickelwelle aufgrund ihres Gewichts aus der Verriegelung löst und sich unkontrolliert bewegt, beispielsweise fällt. Dies stellt ein hohes Verletzungsrisiko für sich in der Nähe befindliche Personen und die Gefahr dar, andere Teile beispielsweise des Vlieswicklers zu beschädigen.

Aufgabe der Erfindung ist es, diesen Nachteilen zu begegnen.

Diese Aufgabe wird durch den Gegenstand der Ansprüche 1 und 10 gelöst. Vorteilhafte Weiterbildungen sind in den Unteransprüchen angegeben.

Erfindungsgemäß ist eine Vorrichtung vorgesehen, die eingerichtet ist, derart in einen Vlieswickler integriert zu werden, dass der Vlieswickler in der Lage ist, mittels der Vorrichtung eine Wickelwelle von einer Warteposition vorzugsweise in eine Anwickelposition und/oder eine Wickelposition zu überführen. Die Vorrichtung weist eine Hebelanordnung auf. Diese ist dergestalt, dass sie in einem Verriegelungszustand die Wickelwelle von einer Seite her derart umgreift, dass die Hebelanordnung, in Längsrichtung der Wickelwelle gesehen, zu einer Seite der Wickelwelle hin offen ist und die Hebel so angeordnet sind, dass eine Gewichtskraft der Wickelwelle daran gehindert ist, in die Hebelanordnung eine (Löse-)Kraft einzuleiten, die geeignet ist, die Verriegelung aufzuheben bzw. zu lösen. D. h. die Hebelanordnung greift nur einseitig an der Wickelwelle an, was eine einfache Rotationsbewegung der Hebelanordnung zum Arretieren und Transportieren der verriegelten Wickelwelle ermöglicht. Zudem sind aufgrund dieser Ausgestaltung keine weiteren Mittel erforderlich, die ein Lösen der Wickelwelle aus der Vorrichtung verhindern, selbst wenn vom Antriebselement beispielsweise in Form eines Pneumatikzylinders keine Kraft in Richtung Verriegelung mehr ausgeübt wird, weil beispielsweise ein Leck vorhanden ist. Abgesehen davon könnte das Antriebselement nach erfolgtem Verriegeln der Wickelwelle bis zum Wiederentriegeln auch abgeschaltet werden, was Energie sparen hilft. Dabei umfasst die Hebelanordnung einen ersten und einen zweiten Hebelarm, die jeweils einerends an ein und demselben Teil drehbar angeordnet sind. Der erste Hebelarm ist anderenends mit dem zweiten Hebelarm drehgelenkig verbunden. Diese Verbindung ist derart, dass ein Verschwenken des ersten Hebels in Richtung Verriegelungszustand dazu führt, dass die Wickelrolle zwischen dem einen Teil und dem zweiten Hebel herausfallsicher aufgenommen wird und der zweite Hebel derart mit verschwenkt wird, dass ein freies Ende des zweiten Hebels und die drehgelenkige Verbindung zwischen den beiden Hebeln die Kraft der Wickelwelle in Richtung einer Drehlagerung des ersten Hebels in Richtung im Wesentlichen senkrecht zum Bewegungsweg dieser einen Drehlagerung umlenkt. D. h. mit dieser mit relativ wenigen Teilen aufgebauten Konstruktion kann der erfindungsgemäße Effekt realisiert werden.

Das Verhindern solch einer Lösekraft ist realisiert, indem eine Gewichtskraft der Wickelrolle mittels der Hebelanordnung derart geleitet wird, dass eine resultierende Kraft in Richtung zumindest einer Drehlagerung der Hebelanordnung im Wesentlichen senkrecht zu einem Bewegungsweg der Drehlagerung im Verriegelungspunkt gerichtet ist. Dies führt dazu, dass die Gewichtskraft nicht in der Lage ist, eine Kraft bzw. ein Drehmoment an der Hebelanordnung zu erzeugen, die bzw. das gegen die Verriegelungsrichtung der Vorrichtung wirkt.

Beide Vorrichtungen können über einen Antriebsabschnitt verfügen. Dieser ist eingerichtet, die Hebelanordnung in Richtung Verriegelungszustand zu bewegen. Dies fördert einen automatischen Wickelbetrieb des Vlieswicklers.

Die drehgelenkige Verbindung zwischen den beiden Hebeln ist vorzugsweise mittels eines drehbar an beiden Hebeln angeordneten Zwischenhebels realisiert. Dies ermöglicht einen zusätzlichen Freiheitsgrad in der Realisierung der erfindungsgemäßen Wirkung der Vorrichtung.

Vorzugsweise alle Hebel(arme) sind um zueinander parallele Achsen rotierbar angeordnet. D. h. die Bewegung der Hebel zueinander erfolgt ausschließlich in einer Ebene. Dies ermöglicht eine besonders platzsparende Integration in den Vlieswickler, da seitlich dieser Ebene andere Teile des Vlieswicklers wie beispielsweise eine Transportvorrichtung zum Transportieren einer Wickelwelle vom Magazin in die Warteposition angeordnet werden können, ohne die Breitenabmessung des Vlieswicklers zu stark zu vergrößern.

Im Falle des Antriebsabschnitts ist dieser vorzugsweise mit einem der Hebel schwenkwirkverbunden. D. h. die mittels des Antriebsabschnitts erzwungene Bewegung eines einzigen Hebels reicht zum Ver- und Entriegeln der Wickelwelle aus. Dies ermöglicht einen sehr einfach aufgebauten und damit kostengünstigen Antriebsmechanismus.

Der angetriebene Hebel ist dabei bevorzugt der vorgenannte, erste Hebel.

Bei den beiden letztgenannten Varianten weist der Antriebsabschnitt vorzugsweise einen Pneumatikzylinder auf. Dieser ist einerends an dem einen Teil drehgelenkig angebracht und so angeordnet, dass dessen Kolben in eine Richtung quer zur Rotationsachse des einen der Hebel, also vorzugsweise des ersten Hebels, bewegbar angeordnet ist und an seinem freien Ende mit diesem Hebel drehgelenkig verbunden ist. Die pneumatische Lösung hat den Vorteil, dass die Vorrichtung aufgrund der eigenen Rotation während des Bewegens der Wickelwelle zwischen Warte- bzw. Andrehposition und Wickelposition einfach an eine in Bezug auf den Vlieswickler feststehende Energieversorgung hier mittels Druckluft angeschlossen werden kann.

Bei jeder der mit zumindest zwei Hebeln ausgestatteten Vorrichtungen kann der zweite Hebel im Kontaktbereich mit der Wickelwelle im Verriegelungszustand im Wesentlichen komplementär zu einer Außenkontur der Wickelwelle ausgebildet sein. Dies fördert eine maximale Berührungsfläche zwischen zweitem Hebel und Wickelwelle und damit eine größtmögliche Klemmwirkung.

Bei jeder der vorgenannten Vorrichtungen kann zumindest ein Hebel doppelt vorhanden sein. Beide Hebel sind dabei so angeordnet, dass ihre Rotationsachsen übereinstimmen. D. h. sie haben ein und dieselbe Rotationsachse. Einer dieser zwei Hebel ist an einer in Richtung seiner Rotationsachse weisenden ersten Außenseite eines der anderen Hebel angeordnet, der nicht Bestandteil des doppelt vorhandenen Hebels ist. Der andere dieser zwei Hebel ist dementsprechend an einer der ersten Außenseite gegenüberliegenden, abgewandten, zweiten Außenseite dieses anderen Hebels angeordnet ist. Der doppelt vorhandene Hebel schließt somit den anderen Hebel, quer zur Rotationsachse, ein. Dies hat den Vorteil, dass keine Kippmomente entstehen können, die die Drehlagerung der Hebel beeinträchtigen und gegebenenfalls zu Beschädigungen an der Drehlagerung führen könnten. Dies dient der Langlebigkeit der Vorrichtung.

Ein Vlieswickler ist erfindungsgemäß eingerichtet, eine erste Wickelrolle mit einem ankommenden Vlies zu bewickeln,und eine zweite Wickelrolle in eine Warteposition zu bringen. Er weist zumindest eine der vorgenannten Vorrichtungen auf. Jede Vorrichtung ist an einem Beförderungsabschnitt des Vlieswicklers in einem Wartezustand so angebracht, dass deren Hebelanordnung in der Lage ist, die zweite Wickelrolle klemmend zu greifen. Der Beförderungsabschnitt wiederum ist gestaltet, die mittels der Vorrichtung geklemmte bzw. verriegelte, zweite Wickelrolle von der Warteposition in Richtung Anwickelposition und/oder Wickelposition des Vlieswicklers zu bewegen. Damit ist ein sicheres Bewegen der Wickelwelle von der Warteposition in Anwickelposition und davon weg in Richtung Wickelposition möglich, in der der Vlieswickler in der Lage ist, die zweite Wickelrolle mittels einer Kontaktwalze des Vlieswicklers zu bewickeln. Ferner ermöglicht die funktionelle Trennung zwischen Verriegeln und Bewegen der jeweiligen Wickelwelle das Optimieren des jeweiligen Mechanismus auf seine Funktion hin.

Vorzugsweise weist der Vlieswickler zusätzlich eine andere der vorgenannten Vorrichtungen auf. Beide Vorrichtungen sind an zwei einander gegenüberliegenden Seiten des Vlieswicklers so angeordnet, dass im Verriegelungszustand jede Vorrichtung ein jeweiliges Ende der zweiten Wickelwelle klemmend greift. D. h. die Wickelwelle bleibt hinsichtlich des vliesaufnehmenden Bereichs und des Abschnitts zum Bewegen der Wickelwelle frei von den erfindungsgemäßen Vorrichtungen. Dadurch beeinflussen die Verriegelungselemente andere Bestandteile des Vlieswicklers konstruktiv wenig oder gar nicht, sodass diese hinsichtlich ihrer Funktion(en) weiterentwickelt werden können oder in üblicher Weise ausgestaltet sein können. Dies fördert die Integrierbarkeit auch in bestehende Vlieswickler.

Weitere Merkmale und Vorteile der Erfindung ergeben sich aus der nachfolgenden Beschreibung bevorzugter Ausführungsformen. Es zeigen:
- Figur 1: einen Vlieswickler gemäß einer Ausführungsform der Erfindung,
- Figur 2: den Vlieswickler von Figur 1 hinsichtlich dessen Bewegungsabschnitts,
- Figur 3: ein vergrößerter Ausschnitt von Figur 2,
- Figur 4: eine zu Figur 3 ähnliche Ansicht des Vlieswicklers, wenn sich die Wickelwelle in Anwickelposition befindet, und
- Figur 5: den Verriegelungsabschnitt des Vlieswicklers von Figur 1 im Verriegelungszustand in vier Ansichten.

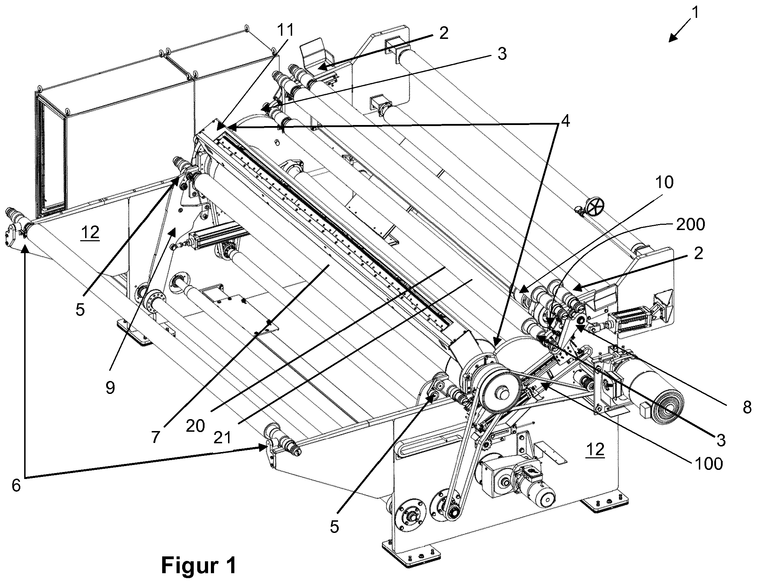

Figur 1 zeigt einen Vlieswickler 1 gemäß einer Ausführungsform der Erfindung. Die für die Erfindung unwesentlichen Bestandteile sind nicht weiter erläutert.

Der Vlieswickler 1 umfasst im Wesentlichen zwei Gestellwände 12, die über nicht bezeichnete Verbinder zu einem Gestell zusammengefasst sind, das alle anderen Funktionselemente des Vlieswicklers 1 aufnimmt bzw. hält.

Die Gestellwände 12 weisen in einem rechten Bereich ein Magazin 2 auf, in dem sich nicht bezeichnete Wickelwellen (hier: zwei) befinden.

Weiterhin umfasst der Vlieswickler 1 an jeder Gestellwand 12 eine Ausnehmung, die eine Warteposition 3 für eine Wickelwelle 20 definiert. Da die Wickelwellen beidseitig von einer jeweiligen Gestellwand 12 gehalten werden, wird somit eine Warteposition 3 mittels der beiden Gestellwände 12 realisiert. Die Gestellwände 12 bilden mittels der Warteposition mithin einen Halteabschnitt für eine zu bewickelnde Wickelwelle 20.

In der Warteposition 3 wird die darin angeordnete Wickelwelle 20 mittels eines Andrehabschnitts 10 in Rotation versetzt. Der Andrehabschnitt 10 kontaktiert dabei den Bereich der Wickelwelle 20, der der Aufnahme von Vlies dient. D. h. nicht die gesamte Wickelwelle 20 wird in Rotation versetzt sondern nur deren hier mittig angeordneter somit Wickelabschnitt 21, der umfangsseitig die eigentliche Wickelfläche bildet.

Um eine Wickelwelle vom Magazin 2 in die Warteposition 3 zu überführen, ist ein Transportabschnitt 8 vorgesehen.

Ferner weist der Vlieswickler 1 eine Anwickelposition 4 auf, die sich in einem Knickbereich, gesehen entlang der Rotationsachse einer Kontaktwalze 7 des Vlieswicklers 1, zwischen Gestellwand 12 und Kontaktwalze 7 befindet. Die Kontaktwalze 7 führt in bekannter Weise das hereinkommende Vlies an die zu bewickelnde Wickelwelle heran.

Zum automatischen Wechseln des Vlieses von einer Wickelwelle auf die nächste ist ein Trennabschnitt 11 vorgesehen.

Ferner weist der Vlieswickler 1 eine Wickelposition 5 auf, die mittels eines hier links angeordneten Abschnitts zwischen Gestellwand 12 und Kontaktwalze 7 realisiert ist. In dieser Position 5 wird die entsprechende Wickelwelle, die bereits Vlies in der Anwickelposition 4 aufgenommen hat, endgültig bewickelt.

Zum Transportieren hier der Wickelwelle 20 von der Warteposition 3 über die Anwickelposition 4 zur Wickelposition 5 werden ein Bewegungsabschnitt 100 und ein Verriegelungsabschnitt 200 genutzt.

Nach dem Bewickeln der jeweiligen Wickelwelle wird das Vlies mittels des Trennabschnitts 11 getrennt, und die bewickelte Wickelwelle wird mittels eines Wickel- und Ausschubabschnitts 9 in eine Ausschubposition 6 des Vlieswicklers 1 bewegt.

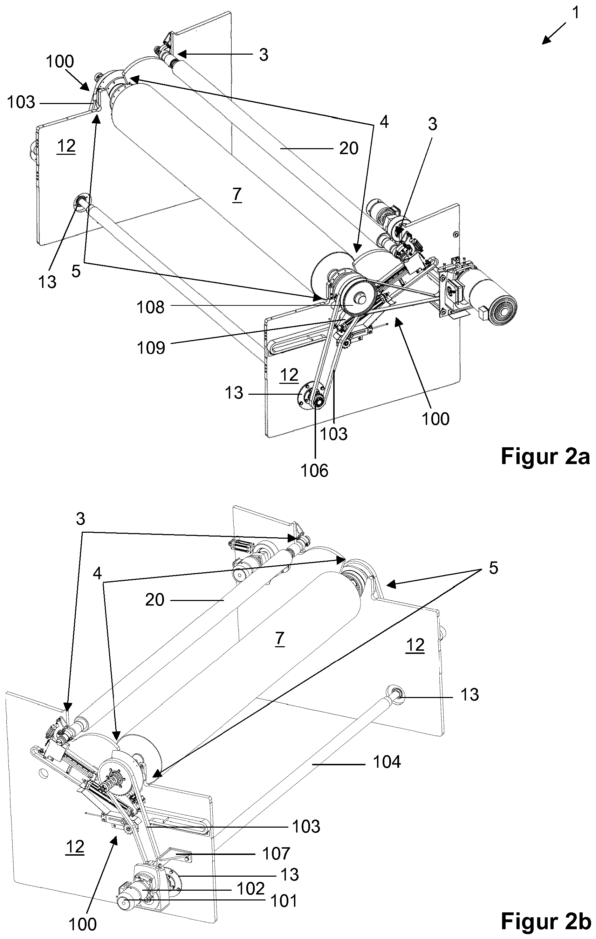

Figur 2 zeigt den Vlieswickler 1 hinsichtlich seines Bewegungsabschnitts 100.

Jeder hier zweier Bewegungsabschnitte 100 umfasst vorzugsweise an beiden Außenseiten der Gestellwände 12 Elemente, die dem Bewegen hier der Wickelwelle 20 von der Warte- bzw. Andrehposition 3 in die Anwickelposition 4 und/oder in die Wickelposition 5 dienen.

Für beide Bewegungsabschnitte 100 ist beispielhaft ein Riemen 103 vorgesehen, der um eine erste, nicht sichtbare Riemenscheibe und um eine zweite Riemenscheibe 108 eines der Bewegungsabschnitte 100 geschlungen ist.

Jeder Bewegungsabschnitt 100 umfasst einen Riemen 113, der um die jeweilige Riemenscheibe 108 und eine zweite Riemenscheibe 106 geschlungen ist. Eine Verbindungswelle 104 ist vorgesehen, die Riemenscheiben 106 beider Bewegungsabschnitte 100 miteinander bewegungszuverbinden. Mittels Rotierens der jeweiligen Riemenscheibe 108 wird ein zum jeweiligen Bewegungsabschnitt 100 gehörendes Schwenkteil 109 mitrotiert.

Die Verbindungswelle 104 ist durch beide Gestellwände 12 hindurchgehend mittels Drehlagern 13 in den Gestellwänden 12 frei rotierbar aufgenommen.

Ein Motor 101 ist mittels eines Getriebes 102 mit der nicht sichtbaren Riemenscheibe wirkverbunden, um die der Riemen 103 geschlungen ist. Der Motor 101 ist damit in der Lage, seine Drehbewegung über die zwei Riemen 113 und die Verbindungswelle 104 auch auf die andere, hier Rückseite der hinteren Gestellwand 12 und damit auf den zweiten Bewegungsabschnitt 100 zu übertragen.

Motor 101, Getriebe 102 und vorzugsweise auch die nicht sichtbare Riemenscheibe sind bevorzugt mittels eines Befestigungselements 107 an der hier vorderen Gestellwand 12 befestigt und bilden mithin ein Antriebsmodul.

Alle Riemen 103, 113, 113 können über einen jeweiligen Riemenspanner verfügen bzw. von einem solchen beaufschlagt sein.

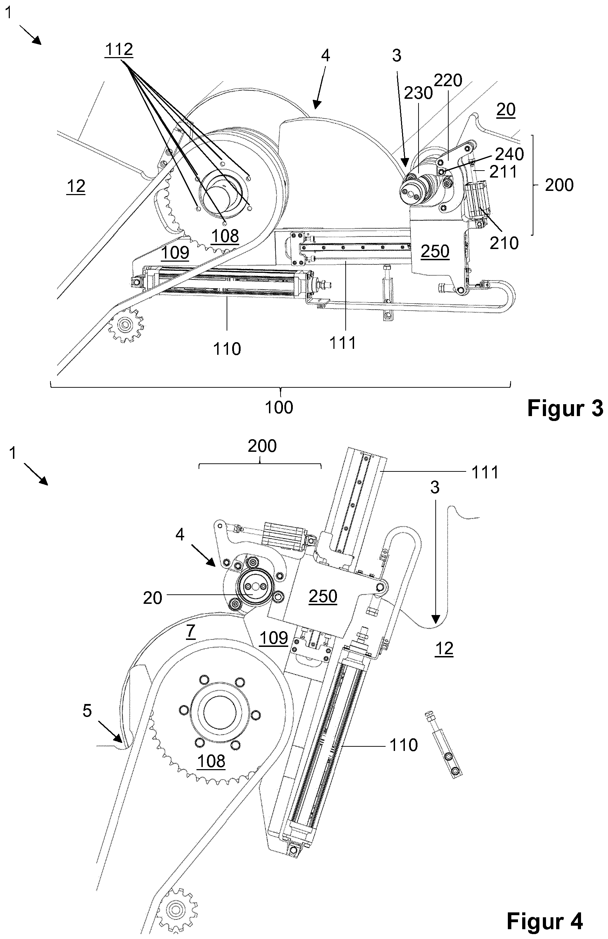

Figur 3 ist ein vergrößerter Ausschnitt des Vlieswicklers 1 im Bereich eines Bewegungsabschnitts 100 und des zugehörigen Verriegelungsabschnitts 200.

Im gezeigten Beispiel sind die Riemenscheibe 108 und das Schwenkteil 109 mittels Befestigungselementen 112 wie Schrauben aneinander befestigt. An dem Schwenkteil 109 ist ein Pneumatikzylinder 110 nebst einer Linearführung 111 befestigt. Die Linearführung 111 führt einen Schlitten 250 des Verriegelungsabschnitts 200 translatorisch von rechts nach links und zurück.

Der Verriegelungsabschnitt 200 umfasst einen Pneumatikzylinder 210, der mit einem seinem Kolben 211 abgewandten Ende an dem Schlitten 250 drehgelenkig befestigt ist. Das freie Ende des Kolbens 211 wiederum ist drehgelenkig an einem Ende eines Zylinderhebels 220 befestigt, der anderenends ebenfalls drehgelenkig am Schlitten 250 befestigt ist.

In einem mittigen Bereich ist am Zylinderhebel 220 ein Verbindungshebel 240 einerends angelenkt. Anderenends ist der Verbindungshebel 240 an einem Verrieglungshebel 230 angelenkt.

Der Verriegelungshebel 230 ist an seinem hier rechten Ende an dem Schlitten 250 angelenkt. Sein linkes Ende trägt eine hier nicht sichtbare Rolle, die im gezeigten Zustand an der Wickelwelle 20 anliegt.

Mittels Herausfahrens des Kolbens 211 ist der Pneumatikzylinder 210 in der Lage, den Verriegelungshebel 230 mit seinem linken Ende weiter in Richtung Wickelwelle 20 zu bewegen, sodass diese zwischen dem Verriegelungshebel 230 und dem Schlitten 250 festgehalten wird.

Der Pneumatikzylinder 110 ist über seinen hier nicht dargestellten Kolben in der Lage, den Schlitten 250 entlang der Linearführung 111 zu bewegen.

Soll die Wickelwelle 20 von der Warteposition 3 in die Anwickelposition 4 bewegt werden, wird mittels des hier nicht dargestellten Motors 101 der ebenfalls nicht sichtbare Riemen 103 so bewegt, dass die Riemenscheibe 108 hier entgegen dem Uhrzeigersinn rotiert wird. Damit wird der Verriegelungsabschnitt 200 mitrotiert.

Dabei wird der Schlitten 250 in Figur 3 nach links bewegt, sodass die gesamte Anordnung 100, 200 bei Erreichen der Anwickelposition 4 einen in Figur 4 gezeigten Zustand annimmt.

In der Anwickelposition 4 wird mittels bekannten Reibeschlusses zwischen Wickelwelle 20 und Kontaktwalze 7 das Vlies von der Kontaktwalze 7 auf die Wickelwelle 20 übertragen und damit die Wickelwelle 20 angewickelt.

Ist die Wickelwelle 20 angewickelt, wird das Schwenkteil 109 gemäß Figur 4 weiter entgegen dem Uhrzeigersinn in Richtung Wickelposition 5 gedreht. Dabei wird im Rahmen der Linearführung 111 nunmehr darauf geachtet, dass die Wickelwelle 20 vorzugsweise ständig in Kontakt mit der Kontaktwalze 7 steht.

Befindet sich die Wickelwelle 20 in der Wickelposition 5, lässt der Verriegelungsabschnitt 200 die Wickelwelle 20 wieder los, und das Schwenkteil 109 wird in die entgegengesetzte Richtung, also im Uhrzeigersinn gemäß Figur 4, zurückgedreht, um die nächste, sich in Warteposition 3 befindliche Wickelwelle übernehmen zu können, wenn die sich nunmehr in Wickelposition 5 befindliche Wickelwelle nahezu voll bewickelt ist und das Vlies auf eine neue Wickelwelle 20 zu übertragen ist.

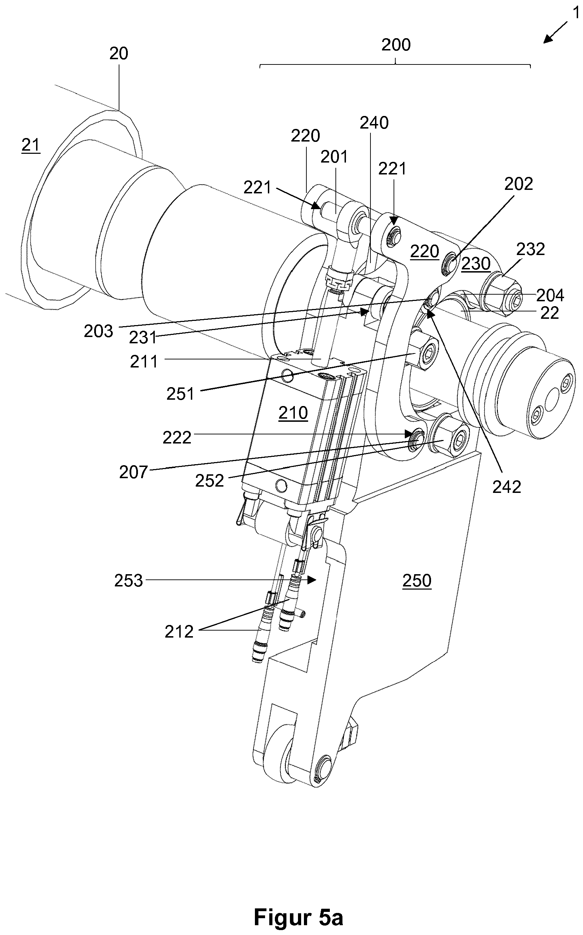

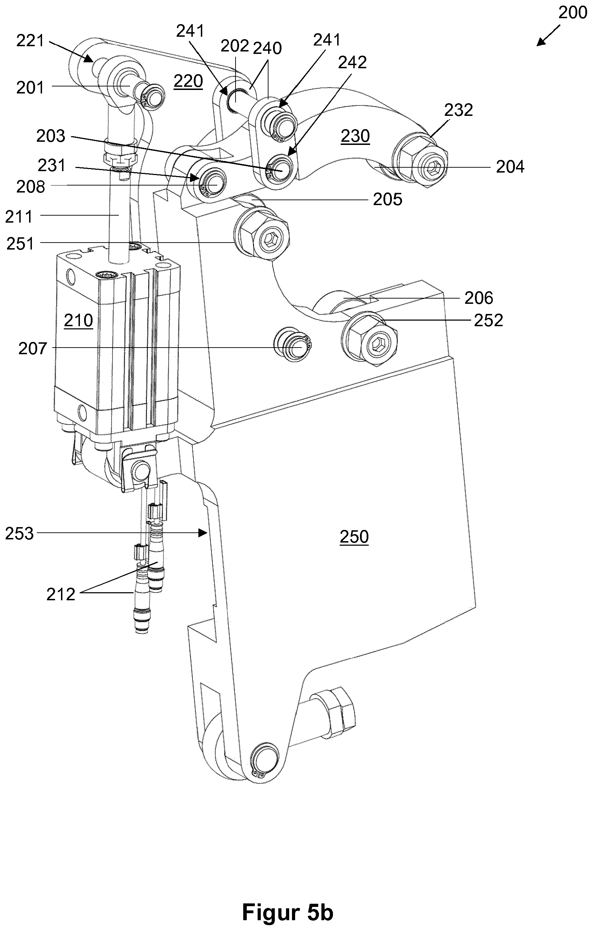

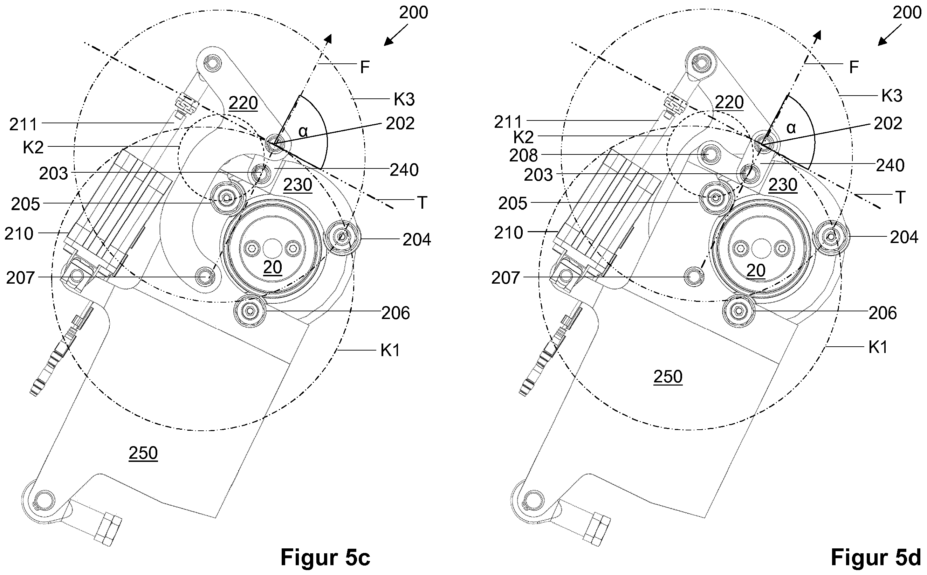

Figur 5 zeigt den Verriegelungsabschnitt 200 in vier Ansichten.

Figur 5a zeigt den Verriegelungsabschnitt 200 als Bestandteil des Vlieswicklers 1 mit verriegelter Wickelwelle 20. Die Wickelwelle 20 ist dabei mittels eines Lagerungsabschnitts hier in Form einer Lagerhülse 22 vom Verriegelungsabschnitt 200 gegriffen.

Figur 5b zeigt den Verriegelungsabschnitt 200 ohne Wickelwelle 20 und ohne vorderen Zylinderhebel 220.

Der Lagerungsabschnitt 22 ist in Bezug auf den Wickelabschnitt 21 der Wickelwelle 20 frei rotierbar angeordnet. Damit ist es möglich, wie vorstehend erläutert, nur den Wickelabschnitt 21 anzudrehen.

Der Verriegelungsabschnitt 200 umfasst den vorstehend erläuterten Schlitten 250, der zugleich als Befestigungselement für die sonstigen Elemente des Verriegelungsabschnitts 200 dient.

Der Pneumatikzylinder 210 ist mit einem seinem Kolben 211 entfernten Ende drehgelenkig am Schlitten 250 um eine Achse parallel zur Rotationsachse bzw. Längserstreckung der Wickelwelle 20 frei rotierbar befestigt. An diesem Ende befinden sich vorzugsweise auch die zwei Anschlüsse 212 des Pneumatikzylinders 210. Das freie Ende des Kolbens 211 ist über einen Verbindungsbolzen 201 an Anlenkstellen 221 hier zweier Zylinderhebel 220 angelenkt.

Die Anlenkstellen 221 sind an einem ersten Ende des jeweiligen Zylinderhebels 220 ausgebildet. An einem anderen Ende ist jeder Zylinderhebel 220 über eine zweite Anlenkstelle 222 vermittels eines Lagerbolzens 207 am Schlitten 250 angelenkt. Der Lagerbolzen 207 bildet somit den Rotationsmittelpunkt des jeweiligen Hebels 220.

In einem Bereich zwischen beiden Anlenkstellen 221, 222 ist am jeweiligen Zylinderhebel 220 ein Verbindungsbolzen 202 frei rotierbar oder drehfest eingesetzt. Der Verbindungsbolzen 202 erstreckt sich dabei von einem Zylinderhebel 220 zum anderen.

An den einander zugewandten Innenseiten der Zylinderhebel 220 ist jeweils ein Verbindungshebel 240 angeordnet und über eine jeweilige Anlenkstelle 241 und den Verbindungsbolzen 202 drehgelenkig mit den Zylinderhebeln 220, 220 verbunden.

An seinem anderen Ende ist jeder Verbindungshebel 240 an einer jeweiligen Anlenkstelle 242 über einen Verbindungsbolzen 203 drehgelenkig nunmehr an dem Verriegelungshebel 230 angelenkt. Der Verriegelungshebel 230 ist an einem hier linken Ende über eine Anlenkstelle 231 und einen Lagerbolzen 208 ebenfalls am Schlitten 250 angelenkt. Sein hier rechtes Ende umfasst eine Rollenhalterung 232, an der eine Rolle 204 frei rotierbar angeordnet ist. Die Rotationsachse der Rolle 204 verläuft dabei parallel zur Rotationsachse der Wickelwelle 20.

Der Schlitten 250 verfügt zusätzlich über zwei Rollenhalterungen 251, 252, die eine jeweilige Rolle 205 bzw. 206 halten. Beide Rollen 205, 206 sind parallel zur Rolle 204 frei rotierbar in Bezug auf den sonstigen Verriegelungsabschnitt 200 angeordnet.

In einem unteren Bereich des Schlitten 250 ist dessen Führungsausnehmung 253 zum translatorischen Führen entlang der Linearführung 111 vorgesehen bzw. ausgebildet.

Das Vorsehen jeweils zweier Hebel 220, 220 bzw. 240, 240 dient dem Zweck, den Verriegelungshebel 230 beidseitig erfassen zu können. Dadurch können keine Dreh- oder Kippmomente entstehen, die eine Beschädigung der Lagerung der Verbindungsbolzen 201 - 203 hervorrufen könnten.

Figur 5c zeigt eine Ansicht analog Figur 5a in Form einer Draufsicht auf das stirnseitige Ende der Wickelwelle 20 in Figur 5a. Figur 5d zeigt eine zu Figur 5c ähnliche Ansicht, nur dass der in Figur 5c vordere Zylinderhebel 220 fehlt.

Eine mittels einer Strichpunktlinie dargestellte Kreislinie kennzeichnet einen Bewegungsweg K1 des Verbindungsbolzens 202, wenn der Zylinderhebel 220 mittels des Pneumatikzylinders 210 in Rotation versetzt bzw. verschwenkt wird.

Die gestrichelte Kreislinie kennzeichnet einen Bewegungsweg K2 des Verbindungsbolzens 203, wenn der Verriegelungshebel 230 in Rotation versetzt bzw. verschwenkt wird.

Eine mittels einer Doppelpunkt-Strich-Linie dargestellte Kreislinie kennzeichnet einen Bewegungsweg K3 der Rolle 204, wenn der Verriegelungshebel 230 verschwenkt bzw. in Rotation versetzt wird.

Um die Wickelwelle 20 zu verriegeln, wird der Kolben 211 des Pneumatikzylinders 210 vorzugsweise herausgefahren. Fällt nun beispielsweise aufgrund eines Lecks der Druck im Pneumatikzylinder 210 ab, könnte dies dazu führen, dass sich die Wickelwelle 20 aus der Verriegelung löst.

Um dies zu verhindern, sind die Hebel 220, 230, 240 und die Anlenkstellen sowohl am Schlitten 250 als auch an den Hebeln 220, 240 so angeordnet, dass ein Drücken der Wickelwelle 20 gegen die Rolle 204 aufgrund der Gewichtskraft der Wickelwelle 20 dazu führt, dass eine resultierende, in den Lagerbolzen 203 eingeleitete und über den Hebel 240 auf den Verbindungsbolzen 202 übertragene Kraft im Wesentlichen senkrecht zu einer den Mittelpunkt des Verbindungsbolzens 202 schneidende Tangente T an der Kreislinie K1 verläuft. Der resultierende Winkel α zwischen der so existierenden Kraftlinie F und der Tangente T ist im günstigsten Fall exakt 90° oder nur geringfügig größer. Dies führt dazu, dass in den Zylinderhebel 220 kein Drehmoment eingeleitet werden kann, das dazu führen könnte, dass der Hebel 220 unglücklicherweise in eine Rotation entgegen dem Uhrzeigersinn in Figur 5c die Verriegelung lösend versetzt wird. Im günstigsten Fall ist das Drehmoment (auch abzüglich etwaiger Reibungskräfte) 0. Die geometrische Anordnung der Hebel 220, 230, 240 ist im Verriegelungszustand also dergestalt, dass die Verriegelung selbsthemmend wirkt. Die Wickelwelle 20 kann sich nicht ohne weiteres aus der Verriegelung lösen, auch wenn der Pneumatikzylinder 210 keine Kraft mehr in Herausfahrrichtung des Kolbens 211 aufbringen kann.

Beispielhaft gehört zu jedem Bewegungsabschnitt 100 ein eigener Verriegelungsabschnitt 200.

Die Erfindung ist nicht auf die vorbeschriebenen Ausführungen beschränkt. Gibt es zwei Verriegelungsabschnitte 200, können diese über eine zur Verbindungswelle 104 analoge Verbindungswelle verfügen, die die angetriebenen Hebel 220 miteinander rotationsverbindet. Jeder Pneumatikzylinder 110 kann durch jedwedes andere Antriebselement wie einen Elektromotor mit Schneckentrieb ersetzt sein. In dem Fall könnte auch das Schneckengetriebe selbsthemmend ausgebildet sein. Oder aber der Elektromotor wirkt beispielsweise über einen Riementrieb gleich rotierend auf den Hebel 220.

Zudem kann eine Sensorik vorgesehen sein, um zu detektieren, wenn sich die Wickelwelle 20 in Warteposition 3, in Anwickelposition 4 und/oder in Wickelposition 5 befindet. Die Sensorik kann dabei optische Sensoren umfassen. Alternativ sind auch berührungssensitive Sensoren wie Schalter denkbar, die vorteilhafterweise von der jeweiligen Wickelwelle betätigt werden, wenn sie die jeweilige Position 3 - 5 erreichen.

Anstelle zumindest einer der Rollen 204 - 206 kann auch ein direktes Anliegen am Schlitten 250 bzw. Hebel 230 • vorgesehen sein. In dem Fall weist die Kontaktfläche des jeweiligen Elements 250, 230 vorzugsweise eine elastische Oberfläche auf, die beispielsweise mittels einer Beschichtung realisiert sein kann. In dem Fall ist die jeweilige Kontaktfläche vorzugsweise zur Außenkontur des Lagerabschnitts 21 der Wickelwelle 20 geformt, um eine größtmögliche Kontaktfläche mit der Wickelwelle 20 zu erreichen. Zudem kann am Verriegelungsabschnitt 200 auch eine elektromagnetische Tragunterstützung vorgesehen sein.

Der Schlitten 111 ist an der Linearführung 124 vorzugsweise mittels einer Schwalbenschwanzführung geführt aufgenommen.

Die Riementriebe können einzeln oder insgesamt durch jedweden anderen Getriebemechanismus wie einen Kettentrieb ersetzt sein.

Anstelle des Hebels 2. 230 kann auch einer der Hebel 2. 220, 240 mittig ange-ordnet sein, sodass in dem Fall vorzugsweise die Hebel 220, 230 bzw_{.} 230, 240 paarig vorhanden sind und jeweils einzeln an einer der einander abgewandten, in Richtung der Rotationsachse des jeweiligen Hebels 220, 240 weisenden Außenflächen dieses Hebels 220, 240 angeordnet sind. Im Ergebnis schafft die Erfindung eine einfache und kostengünstig zu realisierende Möglichkeit, eine Wickelwelle 20 beim Bewegen von der Warteposition 3 in die Anwickelposition 4 oder Wickelposition 5 sicher zu halten.

### Bezugszeichenliste

- 1: Vlieswickler
- 2: Magazin
- 3: Warteposition
- 4: Anwickelposition
- 5: Wickelposition
- 6: Ausschubposition
- 7: Kontaktwalze
- 8: Transportabschnitt
- 9: Wickel- und Ausschubabschnitt
- 10: Andrehabschnitt
- 11: Trennabschnitt
- 12: Gestellwand
- 13: Drehlager

- 20: Wickelwelle
- 21: Wickelabschnitt
- 22: Lagerhülse

- 100: Bewegungsabschnitt
- 101: Motor
- 102: Getriebe
- 103: Riemen
- 104: Verbindungswelle
- 106: Riemenscheibe
- 107: Befestigungselement
- 108: Riemenscheibe
- 109: Schwenkteil
- 110: Pneumatikzylinder
- 111: Linearführung
- 112: Befestigungselement
- 113: Riemen

- 200: Verriegelungsabschnitt
- 201 - 203: Verbindungsbolzen
- 204 - 206: Rolle
- 207,208: Lagerbolzen
- 210: Pneumatikzylinder
- 211: Kolben
- 212: Anschluss

- 220: Zylinderhebel
- 221,222: Anlenkstelle

- 230: Verriegelungshebel
- 231: Anlenkstelle
- 232: Rollenhalterung

- 240: Verbindungshebel
- 241, 242: Anlenkstelle

- 250: Schlitten
- 251,252: Rollenhalterung
- 253: Führungsabschnitt

- F: Kraftlinie
- K1 - K3: Bewegungskreis
- T: Tangente
- α: Winkel

## Patentansprüche

1. Vorrichtung (200),
• eingerichtet, derart in einen Vlieswickler (1) integriert zu werden, dass der Vlieswickler (1) in der Lage ist, mittels der Vorrichtung (200) eine Wickelwelle (20) von einer Warteposition (3) in eine Anwickelposition (4) und/oder eine Wickelposition (5) zu überführen, und
• aufweisend eine Anordnung mit Hebeln (220, 230, 240), die dergestalt ist, dass sie in einem Verriegelungszustand die Wickelwelle (20) von einer Seite her derart umgreift, dass
- die Hebelanordnung (220, 230, 240), in Längsrichtung der Wickelwelle (20) gesehen, zu einer Seite der Wickelwelle (20) hin offen ist und
- die Hebel (220, 230, 240) so angeordnet sind, dass eine Gewichtskraft der Wickelwelle (20) daran gehindert ist, in die Hebelanordnung (220, 230, 240) eine Lösekraft einzuleiten, die geeignet ist, die Verriegelung aufzuheben,
• wobei
- die Hebelanordnung (220, 230, 240) einen ersten Hebelarm (220) und einen zweiten Hebelarm (230) umfasst, die jeweils einerends an einem Teil (250) drehbar angeordnet sind, und
- der erste Hebelarm (220) anderenends mit dem zweiten Hebelarm (230) drehgelenkig derart verbunden ist, dass ein Verschwenken des ersten Hebels (220) in Richtung Verriegelungszustand dazu führt, dass
. die Wickelwelle (20) zwischen dem einen Teil (250) und dem zweiten Hebel (230) herausfallsicher aufgenommen wird und
. der zweite Hebel (230) derart mit verschwenkt wird, dass ein freies Ende des zweiten Hebels (230) und die drehgelenkige Verbindung zwischen den beiden Hebeln (220, 230) die Kraft der Wickelwelle (20) in Richtung einer Drehlagerung (202) des ersten Hebels (220) in Richtung im Wesentlichen senkrecht zum Bewegungsweg der einen Drehlagerung (202) umlenkt. Vorrichtung (200) gemäß Anspruch 1,

2. Vorrichtung (200) gemäß Anspruch 1, ferner aufweisend einen Antriebsabschnitt (210), eingerichtet, die Hebelanordnung (220, 230, 240) in Richtung Verriegelungszustand zu bewegen.

3. Vorrichtung (200) gemäß einem der vorhergehenden Ansprüche, wobei die drehgelenkige Verbindung zwischen den beiden Hebeln (220, 230) mittels eines drehbar an beiden Hebeln (220, 230) angeordneten Zwischenhebels (240) realisiert ist.

4. Vorrichtung (200) gemäß einem der vorhergehenden Ansprüche, wobei alle Hebel (220, 230, 240) um zueinander parallele Achsen rotierbar angeordnet sind.

5. Vorrichtung (200) gemäß Ansprüchen 2 und 4, wobei der Antriebsabschnitt (210) mit einem der Hebel (220, 230, 240) schwenkwirkverbunden ist.

6. Vorrichtung (200) gemäß Anspruch 5, wobei der eine der Hebel (220, 230, 240) der erste Hebel (220) ist.

7. Vorrichtung (200) gemäß Anspruch 5 oder 6, wobei der Antriebsabschnitt (210) einen Pneumatikzylinder (210) aufweist, der
• einerends an dem einen Teil (250) drehgelenkig angebracht ist und
• so angeordnet ist, dass dessen Kolben (211)
- in eine Richtung quer zur Rotationsachse des ersten Hebels (220) bewegbar angeordnet ist und
- an seinem freien Ende mit dem einen der Hebel (220, 230, 240) drehgelenkig verbunden ist.

8. Vorrichtung (200) gemäß einem der vorhergehenden Ansprüche, wobei der zweite Hebel (230) im Kontaktbereich mit der Wickelwelle (20) im Verriegelungszustand im Wesentlichen komplementär zu einer Außenkontur der Wickelwelle (20) ausgebildet ist.

9. Vorrichtung gemäß einem der vorhergehenden Ansprüche, wobei
• z umindest ein Hebel (220, 240) doppelt vorhanden ist,
• beide Hebel des zumindest eine, doppelt vorhandene Hebels (220, 240) so angeordnet sind, dass ihre Rotationsachsen übereinstimmen,
• einer des zumindest einen doppelt vorhandenen Hebels (220, 240) an einer in Richtung seiner Rotationsachse weisenden ersten Außenseite eines der anderen Hebel (220, 230, 240) angeordnet ist und
• der andere des zumindest einen doppelt vorhandenen Hebels (220, 240) an einer der ersten Außenseite gegenüberliegenden, abgewandten, zweiten Außenseite des einen der anderen Hebel (220, 230, 240) angeordnet ist.

10. Vlieswickler (1),
• eingerichtet,
- eine erste Wickelwelle (20) mit einem ankommenden Vlies zu bewickeln, und
- eine zweite Wickelwelle (20) in eine Warteposition (3) zu bringen,
• aufweisend zumindest eine Vorrichtung (200) gemäß einem der vorhergehenden Ansprüche, die an einem Beförderungsabschnitt (100) des Vlieswicklers (1) in einem Wartezustand so angebracht ist, dass die Hebelanordnung (220, 230, 240) in der Lage ist, die zweite Wickelwelle (20) klemmend zu greifen,
• wobei der Beförderungsabschnitt (100) gestaltet ist, die mittels der Vorrichtung (200) geklemmte, zweite Wickelwelle (20) von der Warteposition (3) in Richtung Anwickelposition (4) und/oder Wickelposition (5) des Vlieswicklers (1) zu bewegen, in der der Vlieswickler (1) in der Lage ist, die zweite Wickelwelle (20) mittels einer Kontaktwalze (7) des Vlieswicklers (1) zu bewickeln.

11. Vlieswickler (1) gemäß Anspruch 10,
• ferner aufweisend eine andere Vorrichtung (200) gemäß einem der Ansprüche 1 bis 9,
• wobei die Vorrichtungen (200) an zwei einander gegenüberliegenden Seiten des Vlieswicklers (1) so angeordnet sind, dass im Verriegelungszustand jede Vorrichtung (200) ein jeweiliges Ende der zweiten Wickelwelle (20) klemmend greift.

## Claims

1. A device (200),
• adapted to be incorporated into a web winder (1) in such a manner that, by means of the device (200), the web winder (1) is able to transfer a winding shaft (20) from a waiting position (3) to an initial winding position (4) and/or to a winding position (5), and
• including an assembly with levers (220, 230, 240), which is such that, in an interlocking condition, the assembly surrounds the winding shaft (20) from one side such that
- seen in longitudinal direction of the winding shaft (20), the lever assembly (220, 230, 240) is open towards a side of the winding shaft (20), and
- the levers (220, 230, 240) are disposed so that a weight force of the winding shaft (20) is prevented from introducing a release force into the lever assembly (220, 230, 240), which force is suitable to neutralize the interlocking,
• wherein
- the lever assembly (220, 230, 240) comprises a first lever arm (220) and a second lever arm (230), which are respectively rotatably disposed at one end of a part (250), and
- at the other end, the first lever arm (220) is rotatably articulately connected to the second lever arm (230) such that swivelling the first lever (220) in the direction interlocking condition results in that
■ the winding shaft (20) is captively received between the one part (250) and the second lever (230), and
■ the second lever (230) is swivelled along in such a manner that a free end of the second lever (230) and the rotatable articulated connection between the two levers (220, 230) redirects the force of the winding shaft (20) in the direction of a rotary support (202) of the first lever (220) in the direction essentially vertical to the movement path of the one rotary support (202).

2. The device (200) according to claim 1, furthermore including a drive section (210) adapted to move the lever assembly (220, 230, 240) in the direction interlocking condition.

3. The device (200) according to any of the preceding claims, wherein the rotatable articulated connection between the two levers (220, 230) is realized by means of an intermediate lever (240), which is rotatably disposed at both levers (220, 230).

4. The device (200) according to any of the preceding claims, wherein all levers (220, 230, 240) are rotatably disposed about axes, which are parallel to each other.

5. The device (200) according to the claims 2 and 4, wherein the drive section (210) is swivelably operatively connected to one of the levers (220, 230, 240).

6. The device (200) according to claim 5, wherein the one of the levers (220, 230, 240) is the first lever (220).

7. The device (200) according to claim 5 or 6, wherein the drive section (210) includes a pneumatic cylinder (210), which
• at one end, is rotatably articulately affixed to the one part (250), and
• is disposed so that the piston (211) thereof
- is disposed movably in a direction transversely to the axis of rotation of the first lever (220), and
- at the free end thereof is rotatably articulately connected to the one of the levers (220, 230, 240).

8. The device (200) according to any of the preceding claims, wherein, in the contact area with the winding shaft (20) in the interlocking condition, essentially, the second lever (230) is formed complementarily to an outer contour of the winding shaft (20).

9. The assembly according to any of the preceding claims, wherein
• at least one lever (220, 240) is provided twice,
• both levers of the at least one twice provided lever (220, 240) are disposed so that the axes of rotation thereof coincide,
• one of the at least one twice provided lever (220, 240) is disposed on a first outer side of one of the other levers (220, 230, 240) pointing in the direction of the axis of rotation thereof, and
• the other one of the at least one twice provided lever (220, 240) is disposed on an opposite second outer side of the one of the other levers (220, 230, 240) facing away from the first outer side.

10. A web winder (1),
• adapted
- to wind arriving web on a first winding shaft (20), and
- to bring a second winding shaft (20) to a waiting position (3),
• including at least one device (200) according to any of the preceding claims, which is affixed to a transport section (100) of the web winder (1) in a waiting condition so that the lever assembly (220, 230, 240) is able to surround the second winding shaft (20) in a clamping way,
• wherein the transport section (100) is configured to move the second winding shaft (20), which is clamped by means of the device (200), from the waiting position (3) in the direction initial winding position (4) and/or winding position (5) of the web winder (1), in which the web winder (1) is able to wind on the second winding shaft (20) by means of a contact roll (7) of the web winder (1).

11. The web winder (1) according to claim 10,
• furthermore including another device (200) according to any of the claims 1 to 9,
• wherein the devices (200) are disposed on two sides of the web winder (1) opposite each other so that, in the interlocking condition, each device (200) surrounds a respective end of the second winding shaft (20) in a clamping way.

## Revendications

1. Dispositif (200),
• adapté à être intégré dans un enrouleur de nappe (1) de sorte que, au moyen du dispositif (200), l'enrouleur de nappe (1) est en mesure de transférer un arbre d'enroulement (20) d'une position d'attente (3) vers une position d'enroulement initiale (4) et/ou une position d'enroulement (5), et
• comprenant un agencement de leviers (220, 230, 240), qui, dans une condition de verrouillage, est de telle façon qu'il entoure l'arbre d'enroulement (20) d'un côté de façon à ce que
- vue en direction longitudinale de l'arbre d'enroulement (20), l'agencement de leviers (220, 230, 240) est ouvert vers un côté de l'arbre d'enroulement (20), et
- les leviers (220, 230, 240) sont agencés de sorte qu'une force de poids de l'arbre d'enroulement (20) est empêchée à introduire une force de détachement dans l'agencement de leviers (220, 230, 240) qui est appropriée à annuler le verrouillage,
• dans lequel
- l'agencement de leviers (220, 230, 240) comporte un premier bras de levier (220) et un deuxième bras de levier (230), lesquels sont respectivement agencés de façon rotative d'une extrémité à une pièce (250), et
- de l'autre extrémité, le premier bras de levier (220) est connecté de façon articulée en rotation au deuxième bras de levier (230) de sorte qu'un pivotement du premier levier (220) en direction de condition de verrouillage aboutit en ce que
■ l'arbre d'enroulement (20) est accommodé entre ladite une pièce (250) et le deuxième levier (230) de façon à l'empêcher de tomber, et
■ le deuxième levier (230) est pivoté avec de sorte qu'une extrémité libre du deuxième levier (230) et la connexion articulée en rotation entre les deux leviers (220, 230) renverse la force de l'arbre d'enroulement (20) en direction d'un support rotatif (202) du premier levier (220) essentiellement en direction verticale au chemin de mouvement dudit un support rotatif (202).

2. Dispositif (200) selon la revendication 1, comprenant par ailleurs une section d'entraînement (210) aménagée à mouvoir l'agencement de leviers (220, 230, 240) en direction de condition de verrouillage.

3. Dispositif (200) selon l'une des revendications précédentes, la connexion articulée en rotation entre les deux leviers (220, 230) étant réalisée au moyen d'un levier intermédiaire (240) agencé de façon rotative aux deux leviers (220, 230).

4. Dispositif (200) selon l'une des revendications précédentes, tous les leviers (220, 230, 240) étant agencés de façon rotative autour d'axes parallèles les uns aux autres.

5. Dispositif (200) selon les revendications 2 et 4, la section d'entraînement (210) étant connectée opérationnellement pivotant à l'un des leviers (220, 230, 240).

6. Dispositif (200) selon la revendication 5, ledit un des leviers (220, 230, 240) étant le premier levier (220).

7. Dispositif (200) selon la revendication 5 ou 6, la section d'entraînement (210) comprenant un cylindre pneumatique (210), lequel
• d'une extrémité est monté articulé en rotation à ladite une pièce (250), et
• est agencé de sorte que son piston (211)
- est agencé de façon mobile en une direction transversale à l'axe de rotation du premier levier (220), et
- à son extrémité libre, est connecté articulé en rotation à l'un desdits leviers (220, 230, 240).

8. Dispositif (200) selon l'une des revendications précédentes, dans la région de contact avec l'arbre d'enroulement (20) dans la condition de verrouillage, le deuxième levier (230) étant aménagé essentiellement complémentairement à un contour extérieur de l'arbre d'enroulement (20).

9. Dispositif (1) selon l'une des revendications précédentes,
• au moins un levier (220, 240) étant prévu en double,
• les deux leviers dudit au moins un levier (220, 240) prévu en double étant agencés de façon à ce que leurs axes de rotation concordent,
• l'un dudit au moins un levier (220, 240) prévu un double étant l'agencé à une première face extérieure, orientée en direction de son axe de rotation, de l'un des autres leviers (220, 230, 240), et
• ledit autre dudit au moins un levier prévu en double (220, 240) étant agencé à une deuxième face extérieure orientée de façon détournée, à l'opposé de la première face extérieure dudit un des autres leviers (220, 230, 240).

10. Enrouleur de nappe (1),
• adapté à
- faire enrouler une nappe arrivant sur un premier arbre d'enroulement (20), et
- amener un deuxième arbre d'enroulement (20) vers une position d'attente (3),
• comprenant au moins un dispositif (200) selon l'une des revendications précédentes, lequel, dans une condition d'attente, est monté à une section d'acheminement (100) de l'enrouleur de nappe (1) de sorte que l'agencement de leviers (220, 230, 240) est en mesure de saisir le deuxième arbre d'enroulement (20) de façon serrante,
• la section d'acheminement (100) étant aménagée de façon à mouvoir le deuxième arbre d'enroulement (20), serré au moyen du dispositif (200), de la position d'attente (3) in direction de position d'enroulement initiale (4) et/ou position d'enroulement (5) de l'enrouleur de nappe (1), dans laquelle l'enrouleur de nappe (1) est en mesure de faire enrouler le deuxième arbre d'enroulement (20) au moyen du rouleau de contact (7) de l'enrouleur de nappe (1).

11. Enrouleur de nappe (1) selon la revendication 10,
• comprenant par ailleurs un autre dispositif (200) selon l'une des revendications 1 à 9,
• les dispositifs (200) étant agencés à deux côtés opposés de l'enrouleur de nappe (1) de façon à ce que, dans la condition de verrouillage, chaque dispositif (200) saisit de façon serrée une extrémité respective du deuxième arbre d'enroulement (20).
